(19) Europäisches Patentamt
European Patent Office
Office européen des brevets

(11) **EP 1 884 943 A1**

(12) **EUROPEAN PATENT APPLICATION**

(43) Date of publication:
**06.02.2008 Bulletin 2008/06**

(51) Int Cl.:
*G11B 7/12* (2006.01)   *G11B 7/135* (2006.01)

(21) Application number: **07111633.9**

(22) Date of filing: **03.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **26.07.2006 JP 2006203370**

(71) Applicant: **CANON KABUSHIKI KAISHA**
**Ohta-ku**
**Tokyo 146-8501 (JP)**

(72) Inventor: **TORII, Shinnosuke**
**Tokyo Tokyo 146-8501 (JP)**

(74) Representative: **TBK-Patent**
**Bavariaring 4-6**
**80336 München (DE)**

(54) **Information recording/reproducing device and optical pickup**

(57) An information recording/reproducing device (21) includes an optical pickup (1) having means (4) arranged to split light emitted from a light source (3) into transmitted light and reflected light, an objective lens (7) focusing the transmitted light onto a disc-shaped recording medium (10), a deflecting mirror (5) guiding the transmitted light to the lens, and a photo detector (6) detecting light reflected by the recording medium; and traversing means arranged to move the optical pickup radially of the recording medium. The light source, splitting means, and mirror are arranged on the optical pickup such that a light axis between the light source and mirror is slanted towards an inner periphery of the recording medium with respect to a direction perpendicular to a moving direction of the optical pickup. The photo detector is disposed at an inner periphery side of the recording medium relative to the light axis.

FIG. 1

EP 1 884 943 A1

**Description**

BACKGROUND OF THE INVENTION

Field of the Invention

The present invention relates to information recording/reproducing devices, such as optical disc devices for CDs, DVDs, and Blu-ray discs, and to optical pickups.

Description of the Related Art

In recent years, optical disc devices have been used as storage devices for video camcorders. Such optical disc devices are preferably reduced in size in a plane of projection of a disc. In order to achieve size reduction of an optical disc device in a plane of projection of a disc, it is necessary to reduce the amount of protrusion of the optical disc device from the outer contour of the optical disc.

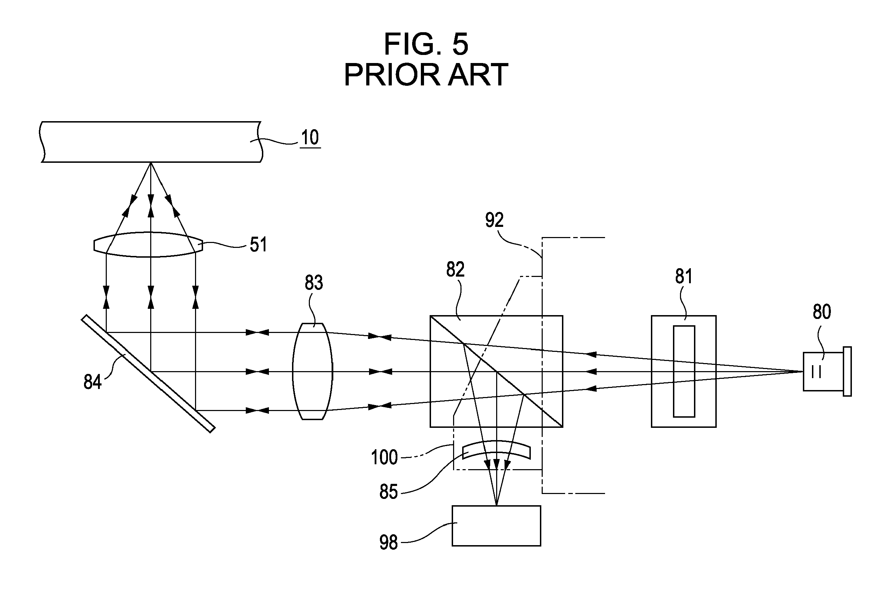

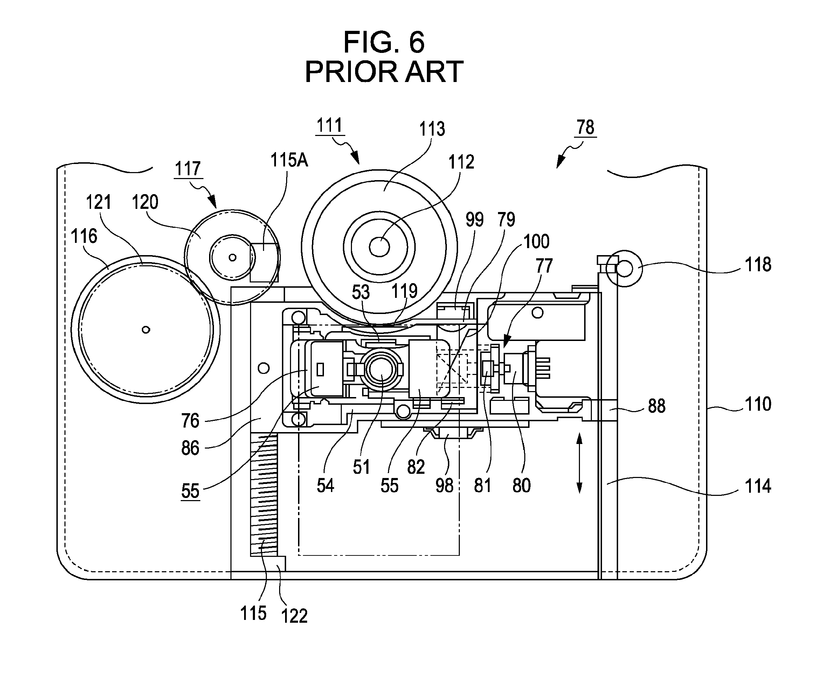

Figs. 5 and 6 illustrate an optical disc device of related art disclosed in Japanese Patent Laid-Open No. 7-201044. A configuration of an optical pickup unit 78 will be described below.

The optical pickup unit 78 has a base member 79 having disposed thereon a semiconductor laser 80 serving as a light source, a beam splitter 82 serving as a splitter, a reflecting mirror 84 serving as a deflecting mirror, a photodetector 98 serving as a photo detector, and an objective-lens actuator 55 supporting an objective lens 51 in a manner such that a beam spot of the objective lens 51 can follow a recording track (not shown) of an optical disc 10.

A light beam emitted from the semiconductor laser 80 enters the beam splitter 82 where the beam is split into reflected light and transmitted light. The light beam transmitted through the beam splitter 82 is reflected by the reflecting mirror 84 in a direction perpendicular to the disc surface of the optical disc 10 so as to enter the objective lens 51. The light beam incident on the objective lens 51 is focused onto an information recording layer (not shown) of the optical disc 10, whereby an information recording operation is performed.

In the case of a reproducing operation, the light beam reflected by the optical disc 10 is condensed by the objective lens 51 and is reflected at the beam splitter 82. The light beam then travels through a multi-lens 85 and enters the photodetector 98 where reproduction of an information signal and generation of servo-error signals are implemented.

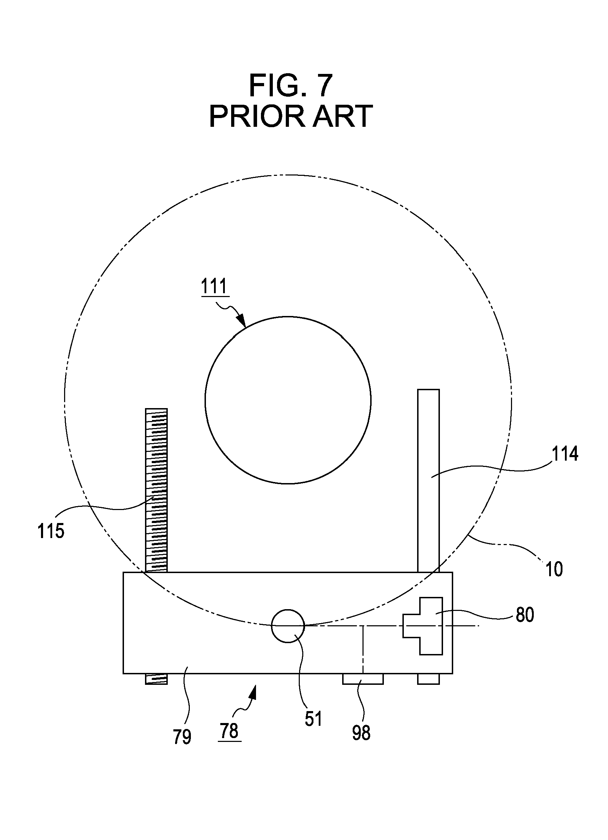

A recording/reproducing device, which is an optical disc device, will now be described in detail with reference to Figs. 6 and 7.

The recording/reproducing device includes a disc rotating mechanism 111 arranged to hold and rotate the optical disc 10, the optical pickup unit 78, a sled feed screw 115 and a pickup feed motor 116 arranged to transfer the optical pickup unit 78 in the radial direction of the optical disc 10, and a guide shaft 114 that supports an optical pickup 54.

A light beam is emitted from the objective lens 51 of the optical pickup unit 78 to the optical disc 10 rotated by the disc rotating mechanism 111. The sled feed screw 115 rotates in response to rotation of the pickup feed motor 116. Thus, the optical pickup unit 78 moves in the radial direction of the optical disc 10 with the guide shaft 114 functioning as a guide, whereby an information recording/reproducing operation is performed from the inner periphery towards the outer periphery of the optical disc 10.

However, the optical disc device of the related art has the following problems. Specifically, in the above example of the related art, a light axis that extends from the semiconductor laser 80 to the reflecting mirror 84 within the area of the disc surface of the optical disc 10 is perpendicular to the moving direction of the optical disc 10. For this reason, when the objective lens 51 is positioned at the outermost periphery of the optical disc 10 as shown in the schematic diagram of Fig. 7, the photodetector 98 and the semiconductor laser 80 protrude from the plane of projection of the optical disc 10. This implies that the base member 79 on which the photodetector 98 and the semiconductor laser 80 are disposed protrudes even further from the plane of projection, leading to an increase in size of the entire optical disc device.

SUMMARY OF THE INVENTION

The present invention in its first aspect provides an information recording/reproducing device as specified in claims 1, 3 and 4.

The present invention in its second aspect provides an information recording/reproducing device as specified in claims 2, 3 and 4.

The present invention in its third aspect provides an optical pickup as specified in claim 5.

The present invention in its fourth aspect provides an optical pickup as specified in claim 6.

Accordingly, a compact device can be achieved without increasing the number of components.

Further features of the present invention will become apparent from the following description of exemplary embodiments with reference to the attached drawings.

BRIEF DESCRIPTION OF THE DRAWINGS

Fig. 1 illustrates an optical pickup according to a first embodiment of the present invention.

Fig. 2 illustrates an optical disc device according to the first embodiment.

Figs. 3A to 3D are diagrams illustrating the arrangement of a light source and a photo detector in the present invention.

Fig. 4 illustrates an optical pickup according to a second embodiment of the present invention.

Fig. 5 illustrates an optical system of related art.

Fig. 6 illustrates a recording/reproducing device of the related art.

Fig. 7 is a schematic diagram showing a state where an optical pickup in the recording/reproducing device of the related art is disposed at an outer periphery side of a disc.

DESCRIPTION OF THE EMBODIMENTS

Exemplary embodiments of the present invention will now be described with reference to the drawings.

First Embodiment

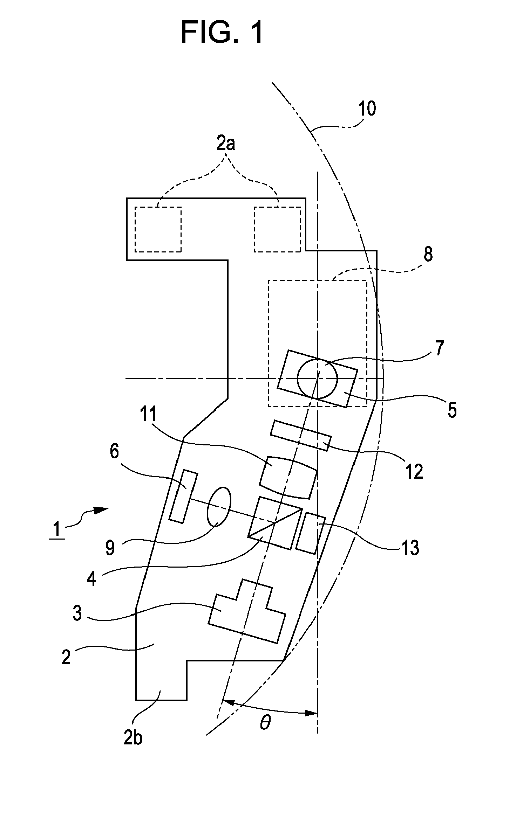

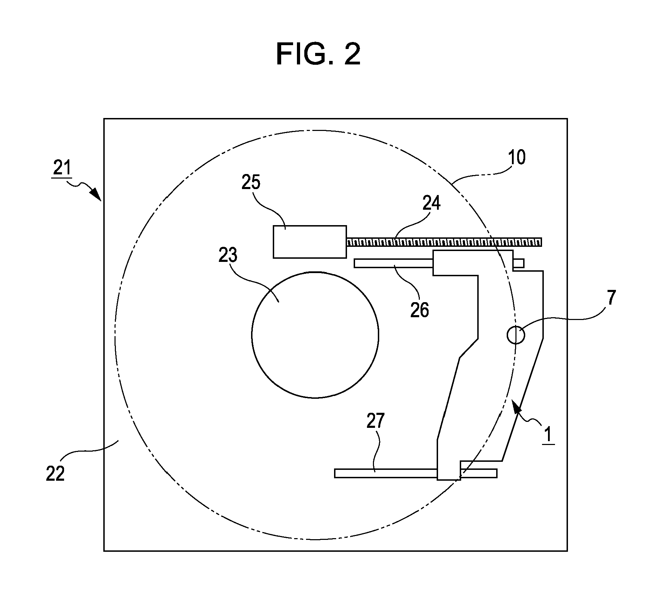

A first embodiment of the present invention will be described below with reference to Figs. 1 and 2. Fig. 1 illustrates an optical pickup 1 according to the first embodiment of the present invention.

The configuration of the optical pickup 1 will be described with reference to Fig. 1.

The optical pickup 1 has an optical base 2 having disposed thereon a semiconductor laser 3 serving as a light source, a polarizing beam splitter 4 serving as a splitter, a collimator 11, a quarter-wave plate 12, a deflecting mirror 5, an RF servo-sensor 6 serving as a photo detector, an objective-lens actuator 8, a sensor lens 9, and a monitor sensor 13. The objective-lens actuator 8 supports an objective lens 7 in a biaxially drivable fashion in a focusing direction and tracking direction with respect to a recording track of an optical disc 10. The objective-lens actuator 8 has a known structure, such as a four-wire structure, and therefore, the description of the structure thereof will be omitted.

The optical base 2 has an integral main shaft bearing 2a and sub shaft bearing 2b that are engaged with two guide shafts of an optical disc device to be described below, and is slidable along the guide shafts. A light axis that extends from the semiconductor laser 3 to the deflecting mirror 5 via the polarizing beam splitter 4 is disposed slantwise at an angle θ towards the inner periphery of the optical disc 10 with respect to a direction perpendicular to the moving direction of the optical pickup 1. The RF servo-sensor 6 is disposed at the inner periphery side of the optical disc 10 relative to the light axis.

A recording/reproducing method will be described below.

A light beam emitted from the semiconductor laser 3 as divergent light enters the polarizing beam splitter 4 where the beam is split into reflected light and transmitted light. The light beam reflected by the polarizing beam splitter 4 enters the monitor sensor 13 where a monitor output signal used for performing output control of the semiconductor laser 3 is generated.

Generally, the monitor sensor 13 may be of any type capable of detecting the light intensity. For this reason, it is a known fact that the monitor sensor 13 can be disposed at a position near the polarizing beam splitter 4.

On the other hand, the light beam transmitted through the polarizing beam splitter 4 is substantially collimated by the collimator 11. The light beam transmitted through the collimator 11 travels through the quarter-wave plate 12 and then to the deflecting mirror 5 where the light beam is reflected perpendicularly to the disc surface of the optical disc 10, whereby the light beam enters the objective lens 7. The light beam incident on the objective lens 7 is focused onto an information-recording layer (not shown) of the optical disc 10, whereby an information recording operation is performed.

The light beam reflected by the optical disc 10 is condensed by the objective lens 7 and is then reflected at the polarizing beam splitter 4. The light beam reflected by the polarizing beam splitter 4 travels through the sensor lens 9 so as to enter the RF servo-sensor 6 serving as a photo detector. Accordingly, reproduction of an information signal and generation of focusing and tracking servo-error signals are implemented. Since the servo techniques used are known techniques (e.g. focus servo: astigmatic method, and tracking servo: push-pull method), the descriptions thereof will be omitted here.

An optical disc device 21 will now be described with reference to Fig. 2. Fig. 2 shows a state where the optical pickup 1 is positioned at the outermost periphery of the optical disc 10.

The optical disc device 21 includes a chassis 22 serving as a base of the overall structure, a spindle motor 23 disposed on the chassis 22 and arranged to hold and rotate the optical disc 10, the optical pickup 1, a feed motor 25 disposed on the chassis 22 and serving as a stepping motor, and a main shaft 26 and a sub shaft 27 serving as guide shafts that support the optical pickup 1. The feed motor 25 has a lead screw 24 arranged to move the optical pickup 1 in the radial direction of the optical disc 10. The feed motor 25, the main shaft 26, and the sub shaft 27 are defined as traversing means.

A light beam is emitted from the objective lens 7 of the optical pickup 1 towards the optical disc 10 rotated by the spindle motor 23. The optical pickup 1 and the lead screw 24 integrated with a rotary shaft of the feed motor 25 are engaged with each other through a rack member, not shown. A rotational movement of the lead screw 24 is converted to a translational movement so that the optical pickup 1 is moved in the radial direction of the disc along the main shaft 26 and the sub shaft 27 serving as guides. Accordingly, an information recording/reproducing operation can be performed from the inner periphery towards the outer periphery of the optical disc 10.

In comparison to the related art, the amount of protrusion from the plane of projection of the disc is reduced in the structure of the present invention, as shown in Fig. 2. Consequently, the optical disc device can be reduced in size.

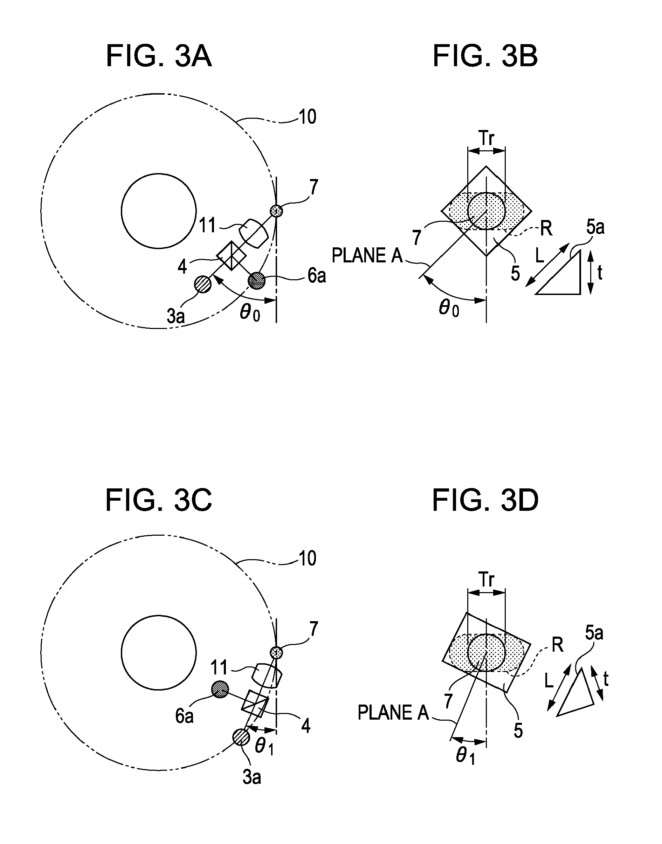

An advantage of disposing the photo detector at the inner periphery side of the optical disc 10 relative to the light axis extending from the light source to the deflecting mirror via the splitter will now be described with reference to Figs. 3A to 3D.

Fig. 3A is a schematic diagram showing a case where the angle $\theta$ in Fig. 1 is $\theta_0$. Fig. 3B is a side view of the deflecting mirror in the case of Fig. 3A. Fig. 3C is a schematic diagram showing a case where the angle $\theta$ is $\theta_1$. Fig. 3D is a side view of the deflecting mirror in the case of Fig. 3C.

A light emitting point 3a of the semiconductor laser 3 serving as a light source and a light detecting surface 6a of the RF servo-sensor 6 serving as a photo detector are disposed at substantially conjugate positions with respect to the collimator 11. This means that the light emitting point 3a and the light detecting surface 6a are split from the polarizing beam splitter 4 serving as a splitter by substantially the same distance. Consequently, when the light emitting point 3a and the light detecting surface 6a are disposed within the plane of projection of the disc as shown in Figs. 3A and 3C, $\theta_0 > \theta_1$.

The objective lens 7 is shiftable in the moving direction of the optical pickup 1 by a distance Tr. This technique is generally implemented in order to, for example, compensate for displacement of a recording track caused by decentering of the optical disc 10 or to intermittently drive the feed motor 25 of the optical disc device 21 for the purpose of achieving low power consumption. Thus, the deflecting mirror 5 that deflects a light beam upward in a direction perpendicular to the disc surface requires an area circumscribed by a moving range R of the objective lens 7, including the distance Tr, within the plane of projection of the disc. On the other hand, a flip-up surface 5a of the deflecting mirror 5 needs to be perpendicular to a plane A that extends along the light axis of a light beam incident on the deflecting mirror 5 and through the center of the objective lens 7. Accordingly, if a distance of the reflective surface of the deflecting mirror 5 in the light-axis direction is represented as L, a thickness t of the deflecting mirror 5 is expressed as follows:

Expression 1

$$t = \frac{L}{\sqrt{2}}$$

From Figs. 3A and 3B and Figs. 3C and 3D, $\theta \propto L$, and $L \propto t$. Accordingly, $\theta \propto t$.

This means that the thickness t of the deflecting mirror 5 decreases with decreasing angle $\theta$. A light beam incident on the deflecting mirror 5 particularly requires a maximum effective diameter in comparison to that on other optical components. For this reason, the thickness t of the deflecting mirror 5 is one of the main factors that determine the thickness of the optical disc device 21.

Accordingly, by disposing the photo detector at the inner periphery side of the optical disc relative to the light axis extending from the light source to the deflecting mirror via the splitter, the optical disc device can be reduced in thickness.

Table 1 below shows design examples for the thickness t of the deflecting mirror 5 with respect to the angle $\theta$. In these design examples, the distance Tr: $\pm 0.3$ = 0.6 mm, and the objective-lens effective diameter: $\phi 3.4$ mm.

Table 1

| ANGLE $\theta$ | THICKNESS t (mm) |
| --- | --- |
| 10 | 4.18 |
| 20 | 4.35 |

If the angle $\theta$ is greater than 20°, not only will the thickness shown in Table 1 increase, but the spindle motor 23 and the RF servo-sensor 6 can unfavorably interfere with each other, which is apparent from Fig. 3C.

Furthermore, in order to achieve the advantage of the present invention, the angle $\theta$ at least needs to be set greater than 0°.

Accordingly, a suitable angle $\theta$ is greater than 0° but equal to or less than 20°. In the first embodiment, the angle $\theta$ is set at about 15°.

In the first embodiment, the splitter may alternatively be defined by a half mirror. In that case, the quarter-wave plate 12 is not necessary, so that the number of components can be reduced.

Second Embodiment

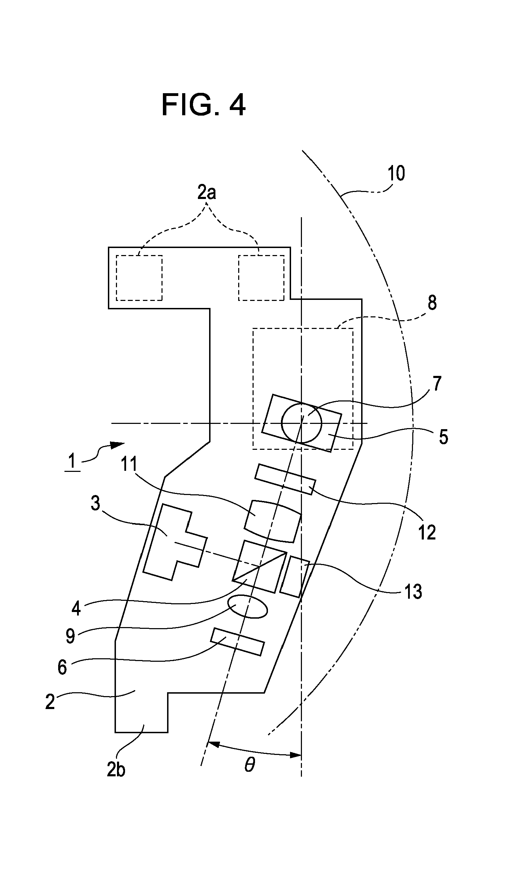

A second embodiment of the present invention will now be described with reference to Fig. 4.

The basic concept of the second embodiment is similar to that of the first embodiment. Therefore, components equivalent to those in the first embodiment are indicated by the same reference numerals, and descriptions of those components will not be repeated.

Fig. 4 illustrates an optical pickup 1 according to the second embodiment.

The basic configuration of the optical pickup 1 is similar to that of the first embodiment. In the second embodiment, a light axis that extends from the deflecting mirror 5 to the RF servo-sensor 6 via the polarizing beam splitter 4 is disposed slantwise at an angle $\theta$ towards the inner periphery of the optical disc 10 with respect to a direction perpendicular to the moving direction of the optical pickup 1. Furthermore, the semiconductor laser 3 is disposed at the inner periphery side of the optical disc 10 relative to the light axis.

A recording/reproducing method will be described below.

A light beam emitted from the semiconductor laser 3 as divergent light enters the polarizing beam splitter 4 where the beam is split into reflected light and transmitted light. The light beam transmitted through the polarizing beam splitter 4 enters the monitor sensor 13 where a monitor output signal used for performing output control of the semiconductor laser 3 is generated. The light beam reflected by the polarizing beam splitter 4 is substantially collimated by the collimator 11. The light beam transmitted through the collimator 11 travels through the quarter-wave plate 12 and then to the deflecting mirror 5 where the light beam is reflected perpendicularly to the disc surface of the optical disc 10, whereby the light beam enters the objective lens 7. The light beam incident on the objective lens 7 is focused onto an information-recording layer (not shown) of the optical disc 10, whereby an information recording operation is performed.

The light beam reflected by the optical disc 10 is condensed by the objective lens 7 and is then transmitted through the polarizing beam splitter 4. The light beam transmitted through the polarizing beam splitter 4 travels through the sensor lens 9 so as to enter the RF servo-sensor 6 serving as a photo detector. Accordingly, reproduction of an information signal and generation of focusing and tracking servo-error signals are implemented.

The configuration and operation of the optical disc device 21 are the same as those of the first embodiment shown in Fig. 2, and therefore, the descriptions thereof will not be repeated.

In the present invention, a light axis that extends from a light source to a deflecting mirror via a splitter is slanted towards an inner periphery of a disc-shaped recording medium with respect to a direction perpendicular to the moving direction of the optical pickup. Consequently, in comparison to the related art, the amount of protrusion from the plane of projection of the disc-shaped recording medium can be reduced, thereby achieving size reduction of the device.

In addition, a photo detector is disposed at the inner periphery side of the disc-shaped recording medium relative to the light axis extending from the light source to the deflecting mirror via the splitter. Thus, in comparison to a case where the photo detector is disposed at the outer periphery side relative to the light axis, the device can be reduced in thickness.

Alternatively, a light axis that extends from a photo detector to a deflecting mirror via a splitter can be slanted towards the inner periphery of the disc-shaped recording medium with respect to a direction perpendicular to the moving direction of the optical pickup. Consequently, in comparison to the related art, the amount of protrusion from the plane of projection of the disc-shaped recording medium can be reduced, thereby achieving size reduction of the device. In that case, a light source is disposed at the inner periphery side of the disc-shaped recording medium relative to that light axis. Thus, in comparison to a case where the light source is disposed at the outer periphery side relative to the light axis, the device can be reduced in thickness.

Furthermore, on the basis of a similar concept as the first embodiment, disposing the light source at the inner periphery side relative to the light axis extending from the photo detector to the deflecting mirror via the splitter allows for thickness reduction of the optical disc device as compared with a case where the light source is disposed line symmetrical to the light axis.

In the second embodiment, the splitter may alternatively be defined by a half mirror. In that case, the quarter-wave plate 12 is not necessary, which implies that the number of components can be reduced.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

An information recording/reproducing device (21) includes an optical pickup (1) having means (4) arranged to split light emitted from a light source (3) into transmitted light and reflected light, an objective lens (7) focusing the transmitted light onto a disc-shaped recording medium (10), a deflecting mirror (5) guiding the transmitted light to the lens, and a photo detector (6) detecting light reflected by the recording medium; and traversing means arranged to move the optical pickup radially of the recording medium. The light source, splitting means, and mirror are arranged on the optical pickup such that a light axis between the light source and mirror is slanted towards an inner periphery of the recording medium with respect to a direction perpendicular to a moving direction of the optical pickup. The photo detector is disposed at an inner periphery side of the recording medium relative to the light axis.

**Claims**

1. An information recording/reproducing device (21) comprising:

   an optical pickup (1) including
   a light source (3),
   means (4) arranged to split light emitted from the light source into transmitted light and reflected light,
   an objective lens (7) arranged to focus the transmitted light onto a disc-shaped recording medium (10),
   a deflecting mirror (5) arranged to guide the transmitted light to the objective lens, and
   a photo detector (6) arranged to detect light reflected by the disc-shaped recording medium and then by the splitting means; and
   traversing means arranged to move the optical pickup in a radial direction of the disc-shaped recording medium,

wherein the light source, the splitting means, and the deflecting mirror are arranged on the optical pickup in a manner such that a light axis extending from the light source to the deflecting mirror is slanted towards an inner periphery of the disc-shaped recording medium with respect to a direction perpendicular to a moving direction of the optical pickup, and

wherein the information recording/reproducing device is **characterized in that** the photo detector is disposed at an inner periphery side of the disc-shaped recording medium relative to the light axis.

2. An information recording/reproducing device (21) comprising:

an optical pickup (1) including
a light source (3),
means (4) arranged to split light emitted from the light source into transmitted light and reflected light,
an objective lens (7) arranged to focus the reflected light onto a disc-shaped recording medium (10),
a deflecting mirror (5) arranged to guide the reflected light to the objective lens, and
a photo detector (6) arranged to detect light reflected by the disc-shaped recording medium and transmitted through the splitting means; and
traversing means arranged to move the optical pickup in a radial direction of the disc-shaped recording medium,

wherein the photo detector, the splitting means, and the deflecting mirror are arranged on the optical pickup in a manner such that a light axis extending from the photo detector to the deflecting mirror is slanted towards an inner periphery of the disc-shaped recording medium with respect to a direction perpendicular to a moving direction of the optical pickup, and

wherein the information recording/reproducing device is **characterized in that** the light source is disposed at an inner periphery side of the disc-shaped recording medium relative to the light axis.

3. The information recording/reproducing device according to one of Claims 1 and 2, wherein the splitting means comprises a polarizing beam splitter.

4. The information recording/reproducing device according to one of Claims 1 and 2, wherein the splitting means comprises a half mirror.

5. An optical pickup (1) movable in a radial direction of a disc-shaped recording medium (10), comprising:

a light source (3);
means (4) arranged to split light emitted from the light source into transmitted light and reflected light;
an objective lens (7) arranged to focus the transmitted light onto the disc-shaped recording medium;
a deflecting mirror (5) arranged to guide the transmitted light to the objective lens; and
a photo detector (6) arranged to detect light reflected first by the disc-shaped recording medium and then by the splitting means,

wherein the light source, the splitting means, and the deflecting mirror are arranged in a manner such that a light axis extending from the light source to the deflecting mirror is slanted towards an inner periphery of the disc-shaped recording medium with respect to a direction perpendicular to a moving direction of the optical pickup, and

wherein the optical pickup is **characterized in that** the photo detector is disposed at an inner periphery side of the disc-shaped recording medium relative to the light axis.

6. An optical pickup (1) movable in a radial direction of a disc-shaped recording medium (10), comprising:

a light source (3);
means (4) arranged to split light emitted from the light source into transmitted light and reflected light;
an objective lens (7) arranged to focus the reflected light onto the disc-shaped recording medium;
a deflecting mirror (5) arranged to guide the reflected light to the objective lens; and
a photo detector (6) arranged to detect light reflected by the disc-shaped recording medium and transmitted through the splitting means,

wherein the photo detector, the splitting means, and the deflecting mirror are arranged in a manner such that a light axis extending from the photo detector to the deflecting mirror is slanted towards an inner periphery of the disc-shaped recording medium with respect to a direction perpendicular to a moving direction of the optical pickup, and

wherein the optical pickup is **characterized in that** the light source is disposed at an inner periphery side of the disc-shaped recording medium relative to the light axis.

# FIG. 1

# FIG. 2

# FIG. 3A

# FIG. 3B

# FIG. 3C

# FIG. 3D

# FIG. 4

# FIG. 5
# PRIOR ART

EP 1 884 943 A1

# FIG. 6
## PRIOR ART

EP 1 884 943 A1

# FIG. 7
# PRIOR ART

**European Patent Office**

**EUROPEAN SEARCH REPORT**

Application Number

EP 07 11 1633

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/055788 A (KONINKL PHILIPS ELECTRONICS NV [NL]; JUTTE PETRUS THEODORUS [FR]) 1 July 2004 (2004-07-01) * page 3, line 7 - page 3, line 30 * * page 4, line 11 - page 4, line 30 * * page 5, line 7 - page 5, line 14 * * figures 2,4,7 * | 1-3,5,6 | INV. G11B7/12 G11B7/135 |
| Y | | 4 | |
| Y | US 2004/145979 A1 (MIYAKE KOJI [JP]) 29 July 2004 (2004-07-29) * page 3, paragraph 57 - page 4, paragraph 65 * * figures 3-6 * | 4 | |
| A | | 1-3,5,6 | |
| A | US 6 163 409 A (UCHIYAMA MINEHARU [JP] ET AL) 19 December 2000 (2000-12-19) * the whole document * | 1-6 | |

TECHNICAL FIELDS SEARCHED (IPC)

G11B

The present search report has been drawn up for all claims

| Place of search | Date of completion of the search | Examiner |
|---|---|---|
| The Hague | 22 November 2007 | BREZMES ALONSO, J |

EPO FORM 1503 03.82 (P04C01)

## ANNEX TO THE EUROPEAN SEARCH REPORT
## ON EUROPEAN PATENT APPLICATION NO.

EP 07 11 1633

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2007

| Patent document cited in search report | | Publication date | Patent family member(s) | | Publication date |
|---|---|---|---|---|---|
| WO 2004055788 | A | 01-07-2004 | AU | 2003302966 A1 | 09-07-2004 |
| | | | CN | 1726542 A | 25-01-2006 |
| | | | JP | 2006510151 T | 23-03-2006 |
| | | | KR | 20050085652 A | 29-08-2005 |
| | | | US | 2006077807 A1 | 13-04-2006 |
| US 2004145979 | A1 | 29-07-2004 | CN | 1525457 A | 01-09-2004 |
| | | | JP | 2004227657 A | 12-08-2004 |
| US 6163409 | A | 19-12-2000 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7201044 A